# EUROPÄISCHE PATENTANMELDUNG

(11) **EP 1 237 350 A1**
(43) Veröffentlichungstag der Anmeldung: **04.09.2002**
(21) Anmeldenummer: 02090015.5
(22) Anmeldetag: 16.01.2002
(51) Int. Cl.: H04M 17/00, G06F 17/60, H04L 12/24

(54) **Verfahren und Kontoführungssystem zum Abrechnen von erbrachten Leistungen in einem Telekommunikationsnetz**

(30) Priorität: 20.02.2001 DE 10109908
(71) Anmelder: SIEMENS AKTIENGESELLSCHAFT, 80333 München (DE)
(72) Erfinder: Lilge, Manfred, 14195 Berlin (DE); Ryll, Thomas, 10823 Berlin (DE)

(57) **Zusammenfassung**

Das erfindungsgemäße Kontoführungssystem (1) zum Abrechnen von erbrachten Leistungen in einem Telekommunikationsnetz weist dabei mindestens eine erste (3) und eine zweite Kontoklasse (4) für einen Leistungsempfänger (2) (Consumer) auf, wobei die Konten (5, 6) der ersten Kontoklasse (3) unter Abführung eines festsetzbaren Mehrwertsteuersatzes und die Konten (7) der zweiten Kontoklasse (4) ohne Abführung eines Mehrwertsteuersatzes aufladbar sind. Das erfindungsgemäße Verfahren zum Abrechnen von erbrachten Leistungen in einem Telekommunikationsnetz erfolgt mittels eines Kontoführungssystems (1) mit mindestens einer ersten (3) und einer zweiten Kontoklasse (4) für den Leistungsempfänger (2) (Consumer), wobei
beim Abrechnen über ein Konto (5, 6) der ersten Kontoklasse (3) kein Mehrwertsteuersatz,
beim Abrechnen über ein Konto (7) der zweiten Kontoklasse (4) ein festsetzbarer Mehrwertsteuersatz abgeführt wird.

## Beschreibung

Telekommunikationsnetze werden in unserer Zeit neben der Funktion der reinen Verbindungsherstellung von zwei oder mehreren Telekommunikationsanschlüssen, d.h. der reinen Telefonie, immer öfter dazu benutzt, weitere Dienstleistungen oder Produkte anzubieten und zu verkaufen. Prinzipiell sind an einem Kaufvorgang innerhalb eines Telekommunikationsnetzes mindestens drei verschiedene Rollen zu unterscheiden. Zum einen gibt es dabei einen Anbieter einer Dienstleistung oder eines Produktes, welcher auch als Merchant bezeichnet wird. Dieser verlangt ein entsprechendes Entgelt für eine von ihm erbrachte Dienstleistung bzw. für ein von ihm geliefertes Produkt. Zum zweiten gibt es einen Käufer einer von dem Merchant angebotenen Dienstleistung oder eines von diesem angebotenen Produktes. Dieser sogenannte Consumer muss für die empfangene Leistung das entsprechende Entgelt entrichten. Letztlich muss es noch eine Einheit geben, die die Bezahlungen zwischen einem Merchant und einem Consumer abwickelt; dabei handelt es sich um einen sogenannten Payment Service Provider (PSP).

In der klassischen, d.h. in der gängigen Telekommunikationswelt tritt ein Netzwerkbetreiber, d.h. ein Netzwerkoperator eines Telekommunikationsnetzes meist sowohl als PSP wie auch als Merchant auf. Er bietet seinen Kunden, den sogenannten Consumern, Telefondienste an und rechnet über seine eingerichteten Abrechnungssysteme bzw. "Billing Systeme" im Voraus, d.h. "prepaid" oder im nachhinein, d.h. "postpaid", ab. "Prepaid-"Konten können dabei über verschiedene Wege durch den Consumer aufgeladen werden. Erst wenn das Konto aufgeladen ist, kann der Consumer Leistungen über das Telekommunikationsnetz in Anspruch nehmen. Die momentan am weitesten verbreiteste Möglichkeit des Aufladens eines derartigen "Prepaid-"Kontos ist das Aufladen durch sogenannte Voucher. Diese Voucher sind für einen bestimmten Betrag im einschlägigen Handel erhältlich. Sie sind mit einer bestimmten Identifikationsnummer versehen. Bei Eingabe dieser Identifikationsnummer seitens des Consumers wird dadurch automatisch sein "Prepaid-"Konto aufgeladen.

Diese "Prepaid-"Konten unterscheiden sich von normalen Bankkonten oder Kreditkartenkonten unter anderem in der Abführung eines Mehrwertsteuersatzes (Value Added Taxes = VAT) an den Staat. Das heißt, dass bereits bei dem Kauf eines Vouchers durch einen Consumer Mehrwertsteuer abgeführt wird.

Wird bei einem Einkauf das Bankkonto eines Consumers belastet, so führt der Merchant nach dem Kaufvorgang von seinem Umsatz den entsprechenden Mehrwertsteuersatz ab. Bei einem "Prepaid-"Konto hingegen führt der Netzwerkbetreiber bzw. - operator beim Verkauf des Vouchers den entsprechenden Mehrwertsteuersatz ab und berechnet dann nicht bei Erbringung seiner Telekommunikationsleistung einzeln den Mehrwertsteueranteil.

Eine Aufgabe der vorliegenden Erfindung war es, ein einfaches Verfahren und ein entsprechendes Kontoführungssystem bereitzustellen, wodurch es möglich wird, beide Alternativen der Mehrwertsteuerabführung, d.h. einmal vor und ein anderes Mal nach Erbringung der Leistung seitens eines Merchants, derart miteinander zu kombinieren, dass von Fall zu Fall beide Alternativen zur Wahl stehen.

Gelöst wird diese Aufgabe erfindungsgemäß durch ein Verfahren gemäß Anspruch 1 bzw. durch ein Kontoführungssystem gemäß Anspruch 7. Weitere vorteilhafte Ausführungsformen sind in den entsprechenden Unteransprüchen genannt.

Gemäß Anspruch 1 wird erfindungsgemäß ein Verfahren zum Abrechnen von erbrachten Leistungen in einem Telekommunikationsnetz mittels eines Kontoführungssystems mit mindestens einer ersten und einer zweiten Kontoklasse für den Leistungsempfänger (Consumer) bereitgestellt, wobei beim Abrechnen über ein Konto der ersten Kontoklasse kein Mehrwertsteuersatz und beim Abrechnen über ein Konto der zweiten Kontoklasse ein festsetzbarer Mehrwertsteuersatz abgeführt wird.

Durch das erfindungsgemäße Verfahren wird ein im mCommerce immer wieder auftauchendes Problem gelöst, das sich ergibt wenn ein Consumer mit seinem "Prepaid"-Konto Leistungen anderer Merchants als die des Netzwerkbetreibers in Anspruch nehmen möchte. Hierbei würde nämlich der Mehrwertsteuersatz doppelt abgerechnet werden. Wird beispielsweise beim Kauf einer CD das "Prepaid-"Konto eines Consumers belastet, so müsste der Merchant einen entsprechenden Mehrwertsteuersatz bei Erbringung der Leistung, d.h. hier bei erfolgreicher Lieferung der CD, abführen. Das aber würde bedeuten, das der von dem "Prepaid-"Konto stammende Geldbetrag abermals mit einer Mehrwertsteuer, nun seitens des Merchants, belastet werden würde, obgleich ja bereits beim Kauf eines das Konto aufladenden Vouchers ein entsprechender Mehrwertsteuersatz seitens des Netzwerkbetreibers abgeführt wurde.

Durch das erfindungsgemäße Verfahren wird es nun möglich, je nach Leistung, insbesondere je nach Leistungsherkunft, d.h. von welchem Merchant die Leistung erbracht wird, die Abrechnung dieser Leistung über ein Konto der ersten Kontoklasse oder über eines der zweiten Kontoklasse durchzuführen.

In einer bevorzugten Ausführungsform des erfindungsgemäßen Verfahrens wird beim Aufladen eines Kontos der ersten Kontoklasse ein festsetzbarer Mehrwertsteuersatz abgeführt, besonders bevorzugt erfolgt dabei das Aufladen eines Kontos der ersten Kontoklasse über ein Voucher. Es wird dadurch möglich, alle Leistungen, die vom Netzwerkbetreiber bzw. -operator erbracht werden über ein Konto der ersten Kontoklasse abzurechnen. Der entsprechend abzuführende Mehrwertsteuersatz wird dabei dann nur einmal abgeführt, nämlich unmittelbar beim Aufladen bzw. beim Kauf eines entsprechenden Vouchers.

Die Abrechnung von Leistungen, die von einem anderen Merchant als dem Netzwerkbetreiber erbracht werden, kann nun, vorzugsweise automatisch, über ein Konto der zweiten Kontoklasse vollzogen werden, so dass die Mehrwertsteuer einmalig erst bei Erbringen der Leistung berechnet und abgeführt wird. Eine doppelte Berechnung zu Lasten des Consumers durch doppelte Mehrwertsteuerabführung wird somit vermieden. Ein Konto der zweiten Kontoklasse kann somit für jegliche mCommerce-Szenarien genutzt werden, insbesondere für Shopping-Szenarien mit einer dritten Partei als Merchant. Der Merchant ist dabei verpflichtet, den korrekten für seine erbrachte Leistung festgesetzten Mehrwertsteuersatz anzuwenden. So werden im Allgemeinen in Deutschland 16% Mehrwertsteuer für eine Leistung bzw. für ein Produkt berechnet, bei Buchverkäufen beispielsweise allerdings nur 7%.

In einer weiteren bevorzugten Ausführungsform des Verfahrens erfolgt das Aufladen eines Kontos der zweiten Kontoklasse über ein gängiges Lastschriftverfahren.

Vorzugsweise wird das Kontoführungssystem von einem Payment Service Provider (PSP) geführt. Besonders bevorzugt ist dabei der Payment Sevice Provider gleichzeitig der Netzwerkbetreiber des Telekommunikationsnetzes. Somit hat der Netzwerkbetreiber auch gleichzeitig einen Überblick beispielsweise darüber, wie viele Consumer wie oft Leistungen von anderen Merchants als ihm in Anspruch nehmen.

Ferner wird erfindungsgemäß ein Kontoführungssystem zum Abrechnen von erbrachten Leistungen in einem Telekommunikationsnetz bereitgestellt, wobei das Kontoführungssystem mindestens eine erste und eine zweite Kontoklasse für einen Leistungsempfänger (Consumer) aufweist und Konten der ersten Kontoklasse unter Abführung eines festsetzbaren Mehrwertsteuersatzes, Konten der zweiten Kontoklasse ohne Abführung eines Mehrwertsteuersatzes aufladbar sind.

Vorzugsweise ist dabei ein Konto der ersten Kontoklasse mit einem Voucher aufladbar. Diese Praxis des Aufladens eines "Prepaid-"Kontos hat sich als sehr schnell und unkompliziert erwiesen soweit es um Abrechnungen von Leistungen des Netzwerkbetreibers selbst ging. In der ersten Kontoklasse lassen sich mehrere verschiedene Konten für den Consumer einrichten, über welche verschiedene Leistungen abgerechnet werden können. So kann beispielsweise ein separates Konto für reine Telefonie und ein weiteres beispielsweise für SMS eingerichtet werden. Dies gewährt dem Netzbetreiber gleichzeitig eine gewisse "Buchführung" über die Art und Häufigkeit der in Anspruch genommenen von ihm angebotenen Leistungen.

In einer weiteren bevorzugten Ausführungsform des erfindungsgemäßen Kontoführungssystems ist ein Konto bzw. alle Konten der zweiten Kontoklasse mittels eines Lastschriftverfahrens aufladbar.

Des Weiteren wird erfindungsgemäß ein Kontoverwaltungssystem bereitgestellt, das ein erfindungsgemäßes Kontoführungssystem und mindestens ein Konto für einen Leistungsanbieter (Merchant) aufweist. Das Kontoverwaltungssystem wird vorzugsweise von einem Payment Service Provider (PSP) betrieben.

Ferner sieht die Erfindung vor ein erfindungsgemäßes Kontoführungssystem und/oder ein erfindungsgemäßes Kontoverwaltungssystems zum Abrechnen von erbrachten Leistungen in einem Telekommunikationsnetz, insbesondere im Bereich es immer weiter verbreiteten mCommerce, zu verwenden.

Weitere Vorteile der Erfindung werden anhand der folgenden Figur erläutert. Es zeigt:

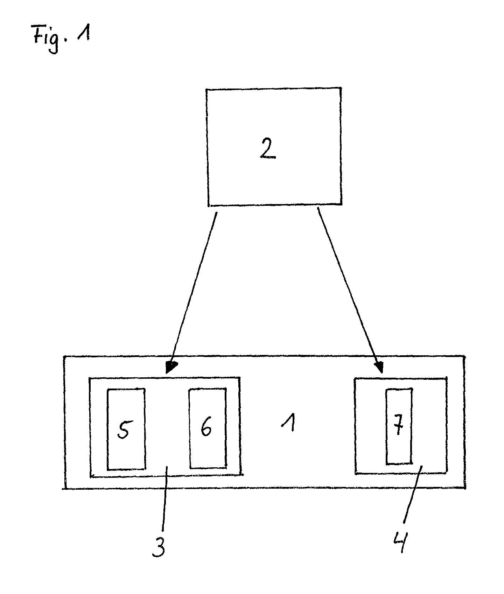

Fig. 1 Bildhafte Darstellung einer Ausführungsform eines erfindungsgemäßen Kontoführungssystems.

Figur 1 zeigt eine beispielhafte Konfiguration eines erfindungsgemäßen Kontoführungssystem 1 zum Abrechnen von erbrachten Leistungen in einem Telekommunikationsnetz. Das erfindungsgemäße Kontoführungssystem 1 ist ein Real-Time Kontoführungssystem ("Payment System"). Vorzugsweise ist es integriert in ein Kontoverwaltungssystem, dass auch Konten für einen oder mehrere Merchants verwaltet. Vorzugsweise wird das Kontoverwaltungssytem und somit auch das Kontoführungssystem 1 von einem Payment Service Provider (PSP) betrieben. Das Kontoführungssystem 1 für den Consumer 2 umfasst in dem hier gezeigten Beispiel zwei Kontoklassen, eine erste Kontoklasse 3 und eine zweite Kontoklasse 4. Die erste Kontoklasse 3 umfasst wiederum zwei Konten 5 und 6. Die Konten 5 und 6 wurden dabei bereits unter Abführung eines entsprechenden Mehrwertsteuersatzes aufgeladen, beispielsweise mittels eines Vouchers. Beim Kauf des Vouchers wird bereits der entsprechende Mehrwertsteuersatz seitens des Netzwerkbetreibers abgezogen. Es handelt sich demnach bei den Konten 5 und 6 der ersten Kontoklasse 3 um Konten mit schon abgeführter Mehrwertsteuer. Die zweite Kontoklasse 4 umfasst hier nur ein Konto 7. Bei dem Konto 7 handelt es sich um ein Konto ohne bereits abgeführte Mehrwertsteuer. Ein derartiges Konto 7 kann beispielsweise mittels eines gängigen Lastschriftverfahrens aufgeladen werden. Der Netzwerkbetreiber bietet im vorliegenden Fall dem Consumer 2 zwei Konten 5 und 6 in der ersten Kontoklasse 3 an, nämlich ein Konto 5 für reine Telefonie und ein Konto 6 für SMS. Beides sind Leistungen, die von dem Netzwerkbetreiber selbst unmittelbar erbracht werden. Von daher ist es hier praktisch und effektiv die dafür anfallende Mehrwertsteuer bereits im Vorfeld pauschal abzuführen, anstatt dies jedes Mal gesondert für jede einzelne dieser Leistungen vornehmen zu müssen. Beim Kauf eines Vouchers zum Aufladen dieser Konten 5 und 6 werden bereits 16% Mehrwertsteuer seitens des Netzwerkbetreibers dem Consumer in Rechnung gestellt. Die zweite Klasse 4 beinhaltet hier ein Konto 7 für mCommerce, d.h. für das vollständige elektronische Abwickeln einer Zahlungstransaktion im mobilen Umfeld für das vom Netzwerkbetreiber keine Mehrwertsteuer abgeführt wird. Ein entsprechender Mehrwertsteuersatz wird erst beim Erbringen einer Leistung durch den PSP bzw. den Merchant berechnet und abgeführt. Beim Kauf einer CD beispielsweise wird erst bei erfolgreicher Lieferung der CD ein entsprechender Mehrwertsteuersatz abgeführt. Der Merchant ist dabei verpflichtet den für die Leistung gültigen Mehrwertsteuersatz anzuwenden. So werden normalerweise in Deutschland 16% Mehrwertsteuer für eine Leistung bzw. ein Produkt berechnet, bei Buchverkäufen aber nur 7% Mehrwertsteuer.

## Patentansprüche

1. Verfahren zum Abrechnen von erbrachten Leistungen in einem Telekommunikationsnetz mittels eines Kontoführungssystems mit mindestens einer ersten (3) und einer zweiten (4) Kontoklasse für den Leistungsempfänger (2) (Consumer), wobei beim Abrechnen über ein Konto (5, 6) der ersten Kontoklasse (3) kein Mehrwertsteuersatz,
beim Abrechnen über ein Konto (7) der zweiten Kontoklasse (4) ein festsetzbarer Mehrwertsteuersatz abgeführt wird.

2. Verfahren nach Anspruch 1,
**dadurch gekennzeichnet,**
**dass** beim Aufladen eines Kontos der ersten Kontoklasse ein festsetzbarer Mehrwertsteuersatz abgeführt wird.

3. Verfahren nach Anspruch 1 oder 2,
**dadurch gekennzeichnet,**
**dass** das Aufladen eines Kontos der ersten Kontoklasse über ein Voucher erfolgt.

4. Verfahren nach einem der vorhergehenden Ansprüche,
**dadurch gekennzeichnet,**
**dass** das Aufladen eine Kontos der zweiten Kontoklasse über ein Lastschriftverfahren erfolgt.

5. Verfahren nach einem der vorhergehenden Ansprüche,
**dadurch gekennzeichnet,**
**dass** das Kontoführungssystem von einem Payment Service Provider (PSP) geführt wird.

6. Verfahren nach Anspruch 5,
**dadurch gekennzeichnet,**
**dass** der Payment Sevice Provider der Netzwerkbetreiber des Telekommunikationsnetzes ist.

7. Kontoführungssystem zum Abrechnen von erbrachten Leistungen in einem Telekommunikationsnetz, wobei das Kontoführungssystem mindestens eine erste und eine zweite Kontoklasse für einen Leistungsempfänger (Consumer) aufweist und Konten der ersten Kontoklasse unter Abführung eines festsetzbaren Mehrwertsteuersatzes, Konten der zweiten Kontoklasse ohne Abführung eines Mehrwertsteuersatzes aufladbar sind.

8. Kontoführungssystem nach Anspruch 7,
**dadurch gekennzeichnet,**
**dass** ein Konto der ersten Kontoklasse mit einem Voucher aufladbar ist.

9. Kontoführungssystem nach Anspruch 7 oder 8,
**dadurch gekennzeichnet,**
**dass** ein Konto der zweiten Kontoklasse mittels eines Lastschriftverfahrens aufladbar ist.

10. Kontoverwaltungssystem, das ein Kontoführungssystem nach einem der Ansprüche 7 bis 9 und mindestens ein Konto für einen Leistungsanbieter (Merchant) aufweist.

11. Verwendung eines Kontoführungssystem nach einem der Ansprüche 7 bis 9 und/oder eines Kontoverwaltungssystems nach Anspruch 10 zum Abrechnen von erbrachten Leistungen in einem Telekommunikationsnetz.
